# EUROPEAN PATENT APPLICATION

(11) **EP 3 591 964 A1**
(43) Date of publication of application: **08.01.2020**
(21) Application number: 19179654.9
(22) Date of filing: 12.06.2019
(51) Int. Cl.: H04N 5/376, H04N 5/369, H04N 5/355

(54) **IMAGING DEVICE, IMAGING SYSTEM, AND MOVING BODY**

(30) Priority: 06.07.2018 JP 2018129180
(71) Applicant: CANON KABUSHIKI KAISHA, Ohta-ku Tokyo 146-8501 (JP)
(72) Inventor: MATSUMOTO, Kohei, Ohta-ku, Tokyo 146-8501 (JP); TOTSUKA, Hirofumi, Ohta-ku, Tokyo 146-8501 (JP); SAKURAI, Katsuhito, Ohta-ku, Tokyo 146-8501 (JP); NAKAMURA, Kohichi, Ohta-ku, Tokyo 146-8501 (JP)
(74) Representative: Houle, Timothy James

(57) **Abstract**

An imaging device including an operation signal generation circuit of reduced circuit scale is provided. The imaging device includes a selection circuit configured to output a pixel transfer pulse signal to be input to a gate of a transfer transistor of a pixel based on a vertical block control signal, a horizontal block control signal, and a row transfer pulse signal.

## Description

### BACKGROUND OF THE INVENTION

### Field of the Invention

The present invention relates to an imaging device, an imaging system, and a moving body.

### Description of the Related Art

Japanese Patent Application Laid-Open No. 2012-151847 discusses controlling the charge accumulation times of a plurality of pixels. Specifically, Japanese Patent Application Laid-Open No. 2012-151847 discusses an imaging sensor including a first substrate 12 and a second substrate 14. The first substrate 12 includes a plurality of pixels 18. The second substrate 14 includes operation signal generation circuits 28. The operation signal generation circuits 28 are electrically connected to electrical connections 38. The electrical connections 38 receive input to the gates of transfer transistors 56 or reset transistors 46 included in the pixels 18.

The transfer transistors 56 or the reset transistors 46 are driven by signals from the operation signal generation circuits 28, whereby the charge accumulation times of charges generated by photoelectric conversion can be controlled. Japanese Patent Application Laid-Open No. 2012-151847 also discusses providing an operation signal generation circuit 28 for each pixel group (pixel block) including a plurality of pixels.

The operation signal generation circuits 28 discussed in Japanese Patent Application Laid-Open No. 2012-151847 have a large circuit scale. The present disclosure is directed to providing an imaging device that can independently control the exposure times of optional pixel blocks in a matrix configuration of pixel blocks including a plurality of pixels, and includes operation signal generation circuits having a circuit scale smaller than the circuit discussed in Japanese Patent Application Laid-Open No. 2012-151847.

### SUMMARY OF THE INVENTION

According to a first aspect of the present disclosure, there is provided an imaging device as specified in claims 1 to 9. According to a second aspect of the present disclosure, there is provided an imaging system as specified in claim 10. According to a third aspect of the present invention, there is provided a moving body as specified in claim 11. According to a fourth aspect of the present invention, there is provided a moving body as specified in claim 12.

Further features of the present disclosure will become apparent from the following description of exemplary embodiments with reference to the attached drawings. Each of the embodiments described below can be implemented solely or as a combination of a plurality of the embodiments or features thereof where necessary or where the combination of elements or features from individual embodiments in a single embodiment is beneficial.

### BRIEF DESCRIPTION OF THE DRAWINGS

Figs. 1A to 1D are diagrams related to a first exemplary embodiment.
Figs. 2A and 2B are diagrams related to the first exemplary embodiment.
Fig. 3 is a diagram related to the first exemplary embodiment.
Fig. 4 is a diagram related to the first exemplary embodiment.
Fig. 5 is a timing chart related to the first exemplary embodiment.
Figs. 6A and 6B are diagrams related to the first exemplary embodiment.
Figs. 7A and 7B are diagrams related to the first exemplary embodiment.
Fig. 8 is a diagram related to a second exemplary embodiment.
Fig. 9 is a diagram related to the second exemplary embodiment.
Fig. 10 is a timing chart related to the second exemplary embodiment.
Fig. 11 is a diagram related to a third exemplary embodiment.
Fig. 12 is a timing chart related to the third exemplary embodiment.
Figs. 13A and 13B are diagrams related to a fourth exemplary embodiment.
Fig. 14 is a diagram related to a fifth exemplary embodiment.
Figs. 15A and 15B are diagrams related to a sixth exemplary embodiment.

### DESCRIPTION OF THE EMBODIMENTS

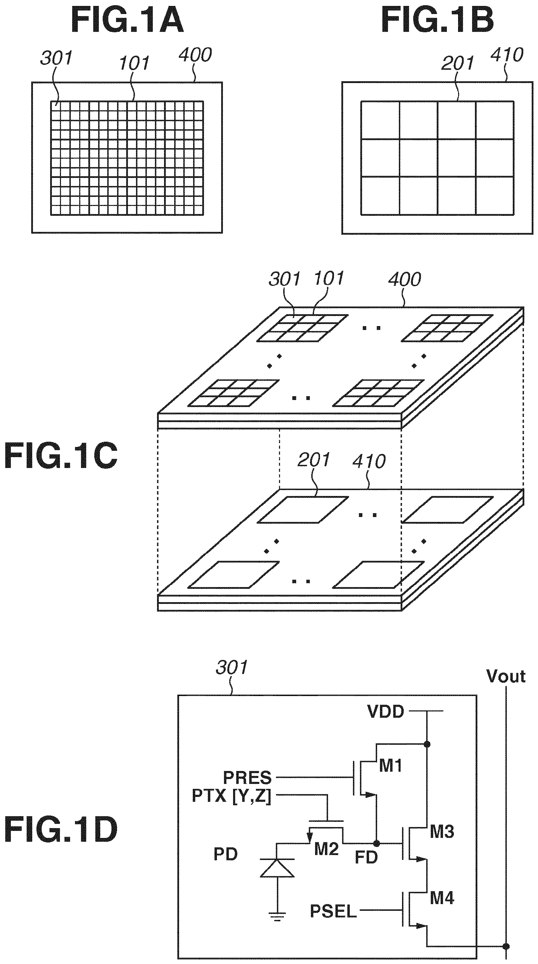

Figs. 1A to 1C are schematic diagrams illustrating an imaging device according to a first exemplary embodiment. A first substrate 400 (first chip) includes a plurality of pixel blocks 101 each including a plurality of pixels 301. In Fig. 1A, for example, a plurality of pixels 301 is arranged in a 4 × 4 matrix in each pixel block 101.

A second substrate 410 (second chip) includes a plurality of circuit blocks 201 each including a selection circuit. The first substrate 400 and the second substrate 410 are stacked as a stacked imaging device.

The pixel blocks 101 and the circuit blocks 201 correspond functionally on a one-to-one basis. Each of the circuit blocks 201 includes at least a selection circuit each. In other words, a predetermined circuit block 201 is provided for a predetermined pixel block 101. The selection circuit included in the predetermined circuit block 201 selects timing of charge accumulation (driving timing) of the predetermined pixel block 101. Details of the selection circuit will be described below.

The pixel blocks 101 and the circuit blocks 201 correspond on a one-to-one basis functionally and in terms of a physical positional relationship as well. More specifically, when seen in a plan view, corresponding predetermined pixel blocks 101 and predetermined circuit blocks 201 are located in overlapping positions. This shortens the electrical connection paths between each of the pixel blocks 101 and each of the circuit blocks 201 for speedup and crosstalk prevention.

Fig. 1D illustrates a configuration example of a pixel 301. The pixel 301 includes a photoelectric conversion unit PD, a transfer transistor M2, and a reset transistor M1. The transfer transistor M2 transfers a charge in the photoelectric conversion unit PD to a floating diffusion portion FD (hereinafter, FD portion). The reset transistor M1 resets the FD portion. The FD portion is connected to the gate of an amplification transistor M3. The amplification transistor M3 and the reset transistor M1 are supplied with a power supply voltage VDD.

A selection transistor M4 is connected to the source of the amplification transistor M3. The selection transistor M4 is connected to a vertical output line Vout. Driving signals PRES, PTX, and PSEL are input to the gates of the reset transistor M1, the transfer transistor M2, and the selection transistor M4, respectively.

A pixel signal from the photoelectric conversion unit PD is read out from the pixel 301 via the vertical output line Vout. The vertical output line Vout is connected to a wiring layer of the second substrate 410 via a plurality of wiring layers of the first substrate 400. For example, the first substrate 400 and the second substrate 410 are electrically connected by contact between wiring portions exposed on the bottommost wiring layer of the first substrate 400 and wiring portions exposed on the topmost wiring layer of the second substrate 410. For example, the wiring portions are made of copper.

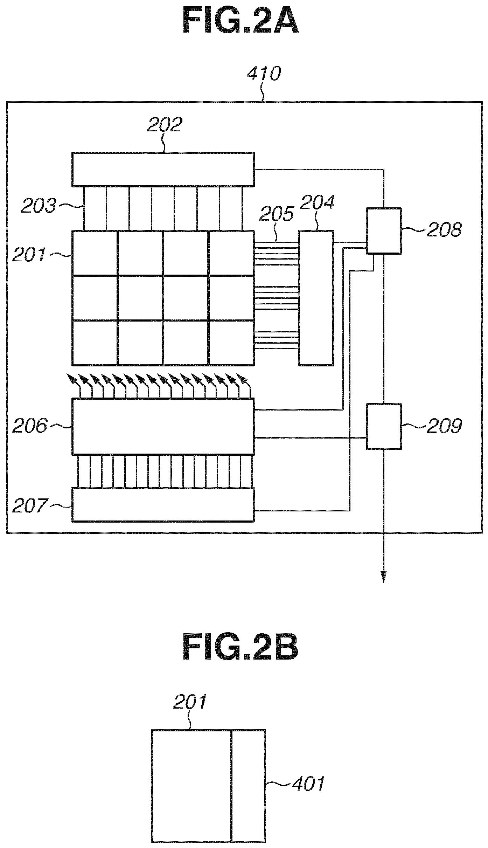

Fig. 2A illustrates the second substrate 410 according to the present exemplary embodiment. A timing generator (TG) 208 supplies a timing signal to a vertical block scanning circuit 204 (first block scanning circuit) having a function of a vertical scanning circuit (first scanning circuit). The TG 208 also supplies timing signals to a horizontal block scanning circuit 202 (second block scanning circuit), a horizontal scanning circuit 207 (second scanning circuit), and a column circuit 206.

Signals from the vertical block scanning circuit 204 are input to the plurality of circuit blocks 201 via a vertical block control signal line group 205. The vertical block scanning circuit 204 outputs signals for controlling the driving timing of a plurality of pixels arranged in a row direction. Signals from the horizontal block scanning circuit 202 are input to the plurality of circuit blocks 201 via a horizontal block control signal line group 203. The horizontal block scanning circuit 202 outputs signals for controlling the driving timing of a plurality of pixels arranged in a column direction.

Fig. 2B illustrates the configuration of a circuit block 201. A selection circuit 401 included in the circuit block 201 selects one of a plurality of timings to supply a signal PTX[X] to the pixel based on the signals from the vertical block scanning circuit 204 and the horizontal block scanning circuit 202. If a timing is selected for the signal PTX[X], a signal PTX[Y, Z] is generated based on the selected timing. The signal PTX[Y, Z] is supplied to the gate of the transfer transistor M2 illustrated in Fig. ID, whereby the charge accumulation timing of the pixel block 101 is controlled. If the signal level of the signal PTX[Y, Z] changes from a low level to a high level, the transfer transistor M2 is turned on and the charge is transferred from the photoelectric conversion unit PD to the FD portion. If the signal level of the signal PTX[Y, Z] changes from the high level to the low level, the transfer transistor M2 is turned off and the charge transfer from the photoelectric conversion unit PD to the FD portion ends.

The selection circuits 401 can set an appropriate exposure amount for the respective pixel blocks 101. For example, if the amount of incident light of one pixel block 101 is different from the amount of incident light of the other pixel block 101, the charge accumulation period of pixel blocks 101 in which the amount of light per unit time is large can be made shorter. The charge accumulation period of pixel blocks 101 in which the amount of light per unit time is small can be made longer than that of the pixel blocks 101 in which the amount of light per unit time is large. This provides an advantage that the dynamic range of the imaging device can be increased.

The second substrate 410 includes the column circuit 206, which is electrically connected to the signal line Vout illustrated in Fig. 1D. The column circuit 206 includes amplification units, analog-to-digital (AD) conversion units, and memories. If the amplification transistor M3 can provide sufficient amplification by itself, the amplification units may be omitted. The AD conversion units convert analog signals from the pixels into digital signals. For example, the AD conversion units each include a comparator, a ramp generator, and a counter. A ramp signal (comparison signal) from the ramp generator is input to either one of input nodes of the comparator. The signal line Vout is connected to the other input node of the comparator. The comparator compares the ramp signal (comparison signal) and the signal on the signal line Vout. The counter measures time until the output of the comparator changes or is inverted, whereby a digital signal value is obtained. Instead of the ramp type AD conversion units, sequential comparison AD conversion units using binary weighted capacitors may be used. Since the AD conversion units have the function of converting an analog signal into a digital signal, the AD conversion units may be referred to as signal processing units. The memories are provided to store the digital signals from the AD conversion units. The digital signals stored in the memories are controlled by the horizontal scanning circuit 207 and output to a signal processing unit 209. The column circuit 206 also includes sense circuits (not illustrated) for amplifying the digital signals stored in the memories.

The digital signals output from the memories are processed by the signal processing unit 209. For example, the signal processing unit 209 performs difference calculation between signal from a pixel in an optical black region and signal from a pixel in an effective pixel region, and addition of pixel signals.

The signal processing unit 209 outputs a control signal to the TG 208 based on the processing result. For example, as will be described below, the signal processing unit 209 outputs a signal for controlling a charge accumulation time (exposure time) pixel block by pixel block. According to the present exemplary embodiment, the selection circuit 401 corresponding to the pixel block 101 is included in each of the circuit blocks 201 corresponding to the respective pixel blocks 101.

The selection circuit 401 selects the signals to be supplied to the gate of the transfer transistor M2. The pixel blocks 101 and the selection circuit 401 thus correspond functionally in the sense that the selection circuits 401 control the charge accumulation times of the plurality of pixels arranged in the pixel blocks 101. Since the pixel blocks 101 and the circuit block 201 also correspond in terms of a physical positional relationship as described above, the selection circuits 401 arranged in the circuit blocks 201 and the pixel blocks 101 also correspond in terms of a physical positional relationship. For example, the pixel blocks 101 and the selection circuit 401 overlap when seen in a plan view.

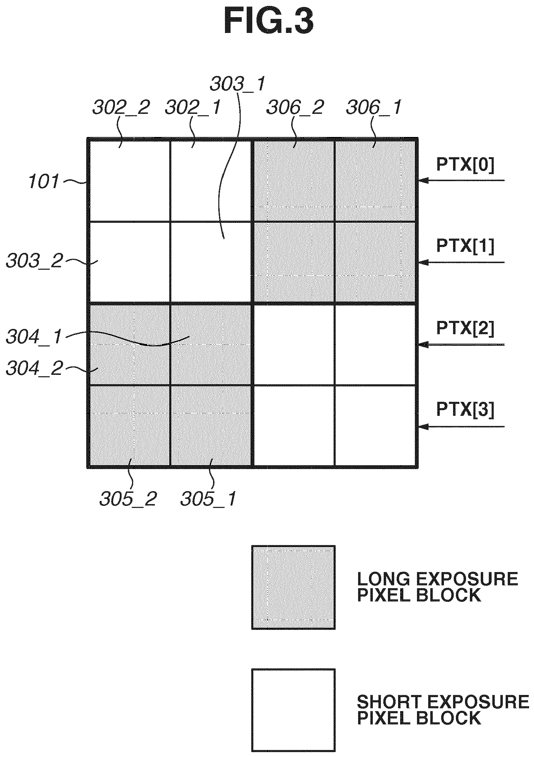

Fig. 3 illustrates a plurality of pixel blocks 101 arranged in two rows and two columns. Each pixel block 101 includes two rows and two columns of pixels. The pixel blocks 101 illustrated in white are pixel blocks intended for short exposure. The pixel blocks 101 illustrated in gray are pixel blocks intended for long exposure.

In an imaging region, a first pixel block and a second pixel block arranged at a position different from the first pixel block may have pixel signals of different levels (signal values). For example, if the signal values of the pixels in the first pixel block fall below a noise level, sufficient gradations may not be obtained from the dark portion. If, in such a case, the exposure times of the first and second pixel blocks are uniformly set to a long time, the second pixel block can reach a saturation level where the signal values of the pixels are high. The second pixel block then may fail to provide sufficient gradations. As illustrated in Fig. 3, according to the present exemplary embodiment, a wide dynamic range is achieved by providing a plurality of pixel blocks intended for long exposure and a plurality of pixel blocks intended for short exposure. More specifically, a wide dynamic range is achieved by providing first pixel blocks in which exposure is performed for a first exposure time and second pixel blocks in which exposure is performed for a second exposure time having a duration different from that of the first exposure time.

Row transfer pulse signals PTX[X] are supplied from the vertical block scanning circuit 204 of Fig. 2A to the selection circuits 401 via the vertical block control signal line group 205. The selection circuits 401 select timing for the row transfer pulse signals PTX[X], and supply pixel transfer pulse signals PTX[Y, Z] to the gates of the transfer transistors M2 based on the selected timing. The pixel transfer pulse signals PTX[Y, Z] may be referred to as pixel driving signal.

As illustrated in Fig. 3, the row transfer pulse signals PTX[0] to PTX[3] correspond to the first to fourth rows of pixels. Fig. 3 illustrates two rows and two columns, i.e., a total of four pixel blocks 101 each including two rows and two columns, i.e., four pixels. The row transfer pulse signals PTX[0] and PTX[1] correspond to the first-row, first-column pixel block 101 and the first-row, second-column pixel block 101. The row transfer pulse signals PTX[2] and PTX[3] correspond to the second-row, first-column pixel block 101 and the second-row, second-column pixel block 101.

In Fig. 3, pixels 302_1 and 302_2 are short exposure pixels, and pixels 306_1 and 306_2 are long exposure pixels. If the operation of the transfer transistors M2 of the pixels 302_1, 302_2, 306_1, and 306_2 is controlled by using only the row transfer pulse signal PTX[0], only either one of short exposure and long exposure can be performed. According to the present exemplary embodiment, the exposure times of the pixels are then controlled by generating the pixel transfer pulse signals PTX[Y, Z] from the row transfer pulse signals PTX[X] by using the horizontal block control signal line group 203, the vertical block control signal line group 205, and the selection circuits 401.

### (Control Signal Line Groups and Selection Circuits)

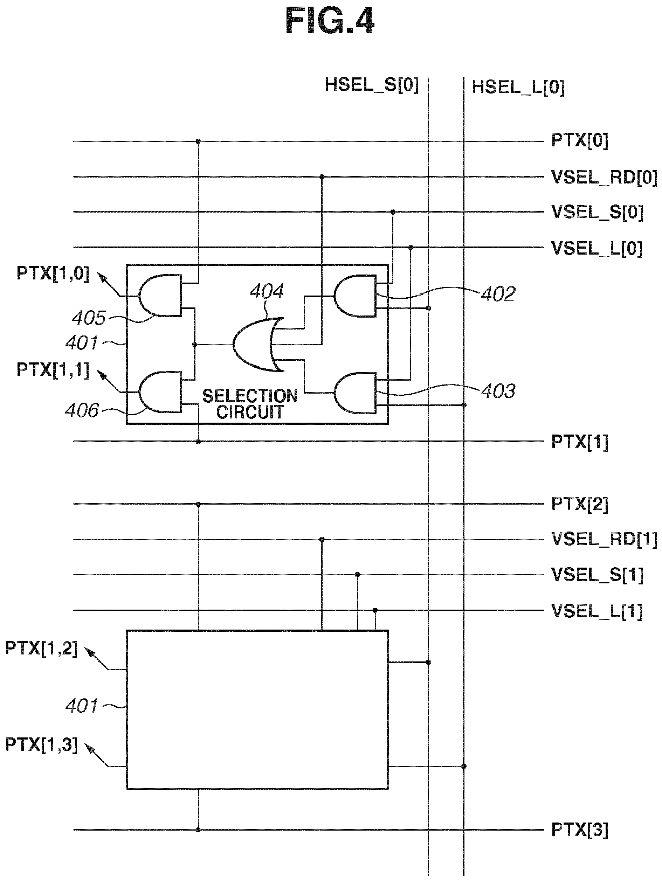

Fig. 4 illustrates a configuration example of signal line groups for transmitting control signals and selection circuits 401. Signal lines VSEL transmit vertical block control signals. Signal lines HSEL transmit horizontal block control signals. Signal lines VSEL_S are intended for short exposure, and signal lines VSEL_L are intended for long exposure. Similarly, signal lines HSEL_S are intended for short exposure, and signal lines HSEL_L are intended for long exposure. Signal lines VSEL_RD are intended for reading.

A selection circuit 401 generates a pixel transfer pulse signal PTX[Y, Z] from a row transfer pulse signal PTX[X] if both the signals supplied to the signal lines HSEL_S and VSEL_S are at a high level and if both the signals supplied to the signal lines HSEL_L and VSEL L are at a high level. The generated pixel transfer pulse signal PTX[Y, Z] is input to the gates of transfer transistors M2. In other combinations, the pixel transfer pulse signal PTX[Y, Z] is not generated from the row transfer pulse signal PTX[X] and no signal is input to the gates of the transfer transistors M2.

Specifically, the signal lines VSEL_S and HSEL_S are input to an AND circuit 402. The AND circuit 402 is configured to output a signal if both the signal lines VSEL_S and HSEL_S are at a high level. The signal lines VSEL_L and HSEL_L are input to an AND circuit 403. The AND circuit 403 is configured to output a signal if both the signal lines VSEL_L and HSEL_L are at a high level. The signal line VSEL_RD and the output signals of the AND circuits 402 and 403 are input to an OR circuit 404. The OR circuit 404 is configured to output a signal if any of the signals are input. The row transfer pulse signals PTX[X] and the output of the OR circuit 404 are input to AND circuits 405 and 406. If both the row transfer pulse signal PTX[X] and the output signal of the OR circuit 404 are input, the AND circuit 405 and/or 406 generates the pixel transfer pulse signal PTX[Y, Z].

A signal line PTX[1, 0] in Fig. 4 transmits the pixel transfer pulse signal to be input to the gates of the transfer transistors M2 of the pixels 302_1 and 302_2 in Fig. 3. Similarly, a signal line PTX[1, 1] corresponds to the pixels 303_1 and 303_2, a signal line PTX[1, 2] corresponds to the pixels 304_1 and 304_2, and a signal line PTX[1, 3] corresponds to the pixels 305_1 and 305_2.

### (Timing Chart)

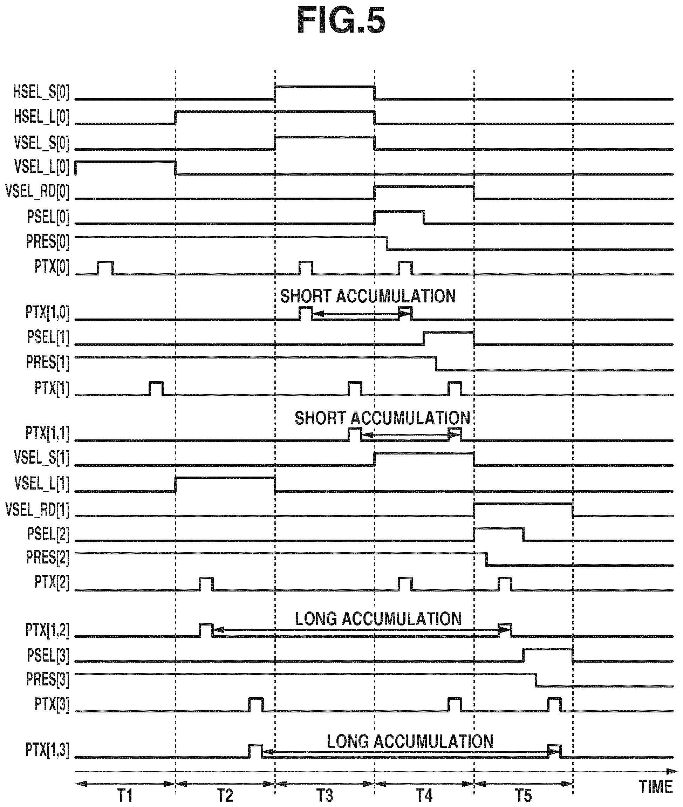

Fig. 5 illustrates a timing chart concerning the pixels 302_1 to 305_2.

### (Period T1)

Period T1 is a period for the first-row, first-column pixel block 101 according to the present exemplary embodiment to start charge accumulation for a long exposure pixel block and not start charge accumulation for a short exposure pixel block. According to the present exemplary embodiment, the pixel block 101 including the pixels 302_1, 302_2, 303_1, and 303_2 is not intended for long exposure, and therefore does not start charge accumulation in period T1. In other words, the selection circuit 401 needs to be configured to not generate the pixel transfer pulse signals PTX[1, 0] and PTX[1, 1] even when the row transfer pulse signals PTX[0] and PTX[1] are input. The signal line VSEL_L[0] is connected in common to a plurality of pixels arranged in the first row, and the pixels 306_1 and 306_2 for long exposure are arranged in the first row and the second column. The signal on the signal line VSEL_L[0] is therefore maintained at a high level. Since the signal on the signal line VSEL_L[0] is at a high level, the pixel transfer pulse signal PTX[1,0] would be generated from the row transfer pulse signal PTX[0] if the signal on the signal line HSEL_L[0] were set to a high level. As a result, the pixel transfer pulse signal PTX[1, 0] would be input to the gates of the transfer transistors M2 of the pixels 302_1 and 302_2. For such a reason, the signal on the signal line HSEL_L[0] is maintained at a low level. In Fig. 5, the signals on the signal lines HSEL_S[0] and VSEL_S[1] are set to a low level.

By such driving, in period T1, the pixel transfer pulse signal PTX[1, 0] is not generated from the row transfer pulse signal PTX[0], and the pixel transfer pulse signal PTX[1, 1] is not generated from the row transfer pulse signal PTX[1]. No signal is thus input to the gates of the transfer transistors M2 of the pixels 302_1, 302_2, 303_1, and 303_2.

### (Period T2).

Period T2 is a period for the second-row, first-column pixel block 101 to start charge accumulation if the pixel block 101 corresponds to a pixel block for long exposure, and not start charge accumulation if the pixel block 101 corresponds to a pixel block for short exposure. According to the present exemplary embodiment, the pixels 304_1, 304_2, 305_1, and 305_2 are pixels belonging to a pixel block for long exposure. The pixel block 101 is thus to start charge accumulation in period T2. The signals on the signal lines VSEL_L[1] and HSEL_L[0] are set to a high level. The pixel transfer pulse signal PTX[1, 2] is thus generated from the row transfer pulse signal PTX[2]. The pixel transfer pulse signal PTX[1, 2] is supplied to the gates of the transfer transistors M2 of the pixels 304_1 and 304_2. Similarly, the pixel transfer pulse signal PTX[1, 3] is generated from the row transfer pulse signal PTX[3]. The pixel transfer pulse signal PTX[1, 3] is supplied to the gates of the transfer transistors M2 of the pixels 305_1 and 305_2. The pixels 304_1, 304_2, 305_1, and 305_2 in the second-row, first-column pixel block 101 thereby start long accumulation.

### (Period T3)

Period T3 is a period for the first-row, first-column pixel block 101 to start charge accumulation for short exposure. Specifically, the pixels 302_1, 302_2, 303_1, and 303_2 start charge accumulation for short exposure in period T3. Here, both the signals on the signal lines VSEL_S[0] and HSEL_S[0] are set to a high level. The pixel transfer pulse signal PTX[1, 0] is thus generated from the row transfer pulse signal PTX[0]. The pixel transfer pulse signal PTX[1, 0] is supplied to the gates of the transfer transistors M2 of the pixels 302_1 and 302_2. Similarly, the pixel transfer pulse signal PTX[1, 1] is generated from the row transfer pulse signal PTX[1]. The pixel transfer pulse signal PTX[1, 1] is supplied to the gates of the transfer transistors M2 of the pixels 303_1 and 303_2. Short accumulation is thereby started.

### (Period T4)

Period T4 is a period for the pixels 302_1, 302_2, 303_1, and 303_2 belonging to the first-row, first-column pixel block 101 to end the charge accumulation for short exposure. The pixel transfer pulse signals PTX[Y, Z] need to be supplied to the gates of the transfer transistor M2 of these pixels. For that purpose, the signal line VSEL_RD[0] is set to a high level. The signal lines VSEL_RD are intended for reading. If the signals on the signal lines VSEL_RD are set to a high level, the pixel transfer pulse signals PTX[Y, Z] are generated from the row transfer pulse signals PTX[X] regardless of the levels of the signal lines VSEL and HSEL. The pixel transfer pulse signals PTX[Y, Z] are thus supplied to the gates of the transfer transistors M2 of the pixels 302_1, 302_2, 303_1, and 303_2.

Meanwhile, the pixels 304_1, 304_2, 305_1, and 305_2 belonging to the second-row, first-column pixel block 101 continue long exposure in period T4. For that purpose, the pixel transfer pulse signals PTX[Y, Z] are not supplied to the gates of the transfer transistors M2 of the pixels 304_1, 304_2, 305_1, and 305_2 in period T4. The signal line HSEL_S[0] is set to a low level so that the pixel transfer pulse signals PTX[Y, Z] are not generated from the row transfer pulse signals PTX[2] and PTX[3]. The pixel driving signals to be supplied to the gates of the transfer transistors M2 are therefore not supplied to the pixels 304_1, 304_2, 305_1, and 305_2.

### (Period T5)

Period T5 is a period for the pixels 304_1, 304_2, 305_1, and 305_2 belonging to the second-row, first-column pixel block 101 to end the charge accumulation for long exposure. The pixel transfer pulse signals PTX[Y, Z] need to be supplied to the gates of the transfer transistors M2 of these pixels. For that purpose, the signal on the signal line VSEL_RD[1] is set to a high level. As a result, the pixel transfer pulse signals PTX[Y, Z] are generated from the row transfer pulse signals PTX[2] and PTX[3]. The pixel transfer pulse signals PTX[Y, Z] are supplied to the gates of the transfer transistors M2 of the pixels 304_1, 304_2, 305_1, and 305_2.

Although not described in detail above, the signal lines PSEL illustrated in Fig. 5 transmit the signals for turning on the selection transistors M4. The signal lines PRES transmit the signals for turning on the reset transistors M1. The signal lines PSEL and PRES are included in the vertical block control signal line group 205.

Since the selection circuits 401, the vertical block scanning circuit 204, the vertical block control signal line group 205, the horizontal block scanning circuit 202, and the horizontal block control signal line group 203 are configured as described above, the respective pixel blocks 101 can be independently selected for exposure time control.

The foregoing selection of the pixel driving signals PTX[Y, Z] by using the horizontal block control signal line group 203 and the vertical block control signal line group 205 is just an example. The selection circuits 401 according to the present exemplary embodiment may be any circuit as long as the input timing of the pixel driving signals PTX[Y, Z] related to the plurality of pixel blocks 101 can be independently selected by using the horizontal block control signal line group 203 and the vertical block control signal line group 205.

### (First Modification)

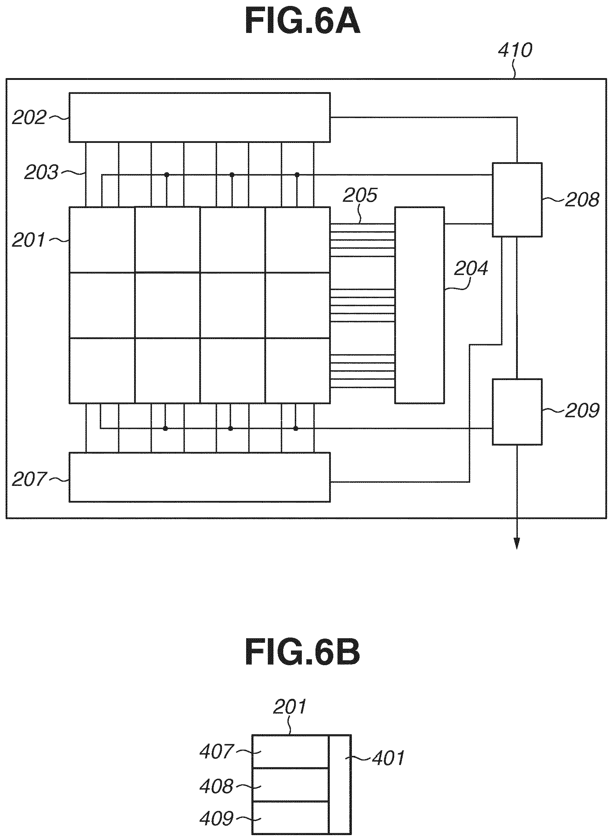

In the example illustrated in Fig. 2, the column circuit 206 includes the amplification units, the AD conversion units, and the memories. However, as illustrated in Figs. 6A and 6B, the amplification unit, the AD conversion unit, and the memory may be included in the each of the circuit blocks 201.

Specifically, as illustrated in Fig. 6B, a circuit block 201 includes an amplification unit 407 electrically connected to a signal line Vout in addition to the selection circuit 401. The amplification unit 407 is provided if the amplification transistors M3 included in the pixels fail to provide sufficient signal amplification. If the amplification transistors M3 can provide sufficient amplification, the amplification unit 407 may be omitted.

The circuit block 201 includes an AD conversion unit 408 electrically connected to the amplification unit 407. The AD conversion unit 408 converts analog signals from the pixels into digital signals. Various configurations mentioned above can be used for the AD conversion unit 408.

The circuit block 201 further includes a memory 409 for storing the digital signals from the AD conversion unit 408. The digital signals stored in the memory 409 are controlled by the horizontal scanning circuit 207 and output to the signal processing unit 209. The circuit block 201 may include a sense circuit (not illustrated) for amplifying the digital signals stored in the memory 409.

The digital signals output from the memory 409 are processed by the signal processing unit 209. The configurations described above may be applied to the processing of the signal processing unit 209.

According to the present modification, the selection circuits 401 corresponding to the pixel blocks 101 are included in the circuit blocks 201 corresponding to the respective pixel blocks 101. The selection circuits 401 select the signals to be supplied to the gates of the transfer transistors M2. The pixel blocks 101 and the selection circuits 401 thus correspond functionally in the sense that the selection circuits 401 control the charge accumulation times of the plurality of pixels arranged in the pixel blocks 101. Since the pixel blocks 101 and the circuit blocks 201 also correspond in terms of a physical positional relationship as described above, the selection circuits 401 included in the circuit blocks 201 and the pixel blocks 101 thus also correspond in terms of a physical positional relationship. For example, the pixel blocks 101 corresponding to the respective selection circuits 401 overlap when seen in a plan view.

Each of the circuit blocks 201 corresponding to the respective pixel blocks 101 includes a circuit that can be provided on the first substrate 400 or the second substrate 410 other than the selection circuits 401. Examples of the circuit other than the selection circuit 401 include the amplification unit 407, the AD conversion unit 408, and the memory 409. If a circuit other than the selection circuits 401 is arranged in the circuit blocks 201, the space on the first substrate 400 other than the pixel blocks 101 can be reduced for space saving. As a result, the number of pixel blocks 101 arranged on the first substrate 400 can be increased.

### (Second Modification)

This modification deals with a case where the exposure times of the respective pixel blocks 101 are determined by preliminary exposure.

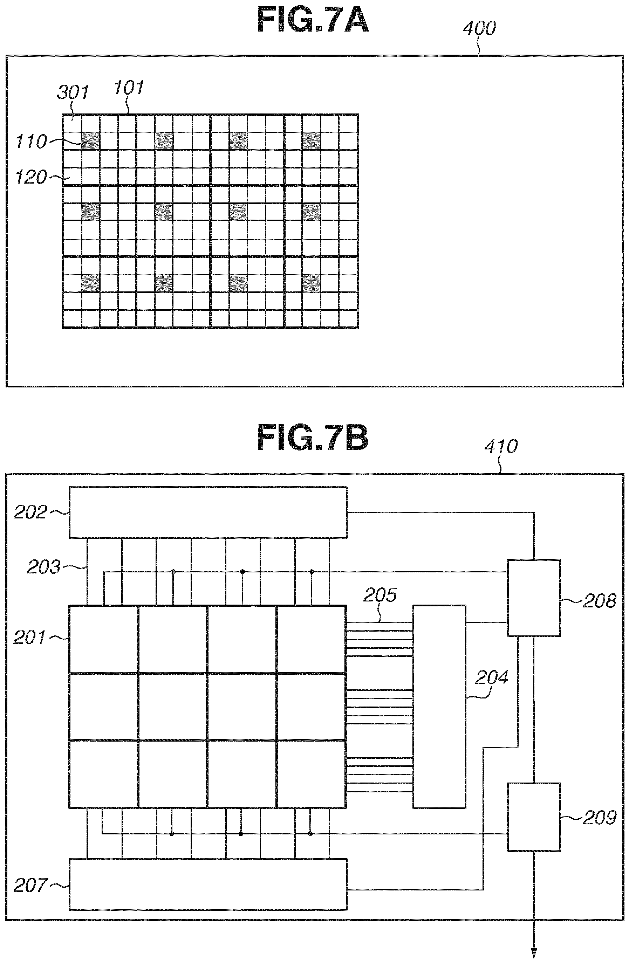

In Fig. 7A, each pixel block 101 includes a first-type pixel 110 and second-type pixels 120. The first-type pixel 110 is part of the pixels arranged in the pixel block 101. The first-type pixel 110 is used for thinning-out reading (thinning-out pixel). The second-type pixels 120 are not used for thinning-out reading but for image formation (non-thinning-out pixels).

Initially, the exposure conditions for the respective pixel blocks 101 are determined by performing thinning-out reading on the first-type pixels 110. Specifically, the signals of the first-type pixels 110 arranged in the plurality of pixel blocks 101 are read via vertical output lines Vout. The analog signals of the pixels 110 are input to amplification units on the second substrate 410 via a plurality of wiring layers. The analog signals amplified by the amplification units on the second substrate 410 are converted into digital signals by AD conversion units. The signals from the first-type pixels 110 are stored in memories, and sequentially read and output to the signal processing unit 209 by using the TG 208 and the horizontal scanning circuit 207.

The signal processing unit 209 determines the exposure conditions for the respective pixel blocks 101. For example, the signal processing unit 209 compares the value of a pixel signal with a threshold value. If the pixel signal exceeds the threshold, the signal processing unit 209 determines to perform short exposure on the pixel block 101 to which the first-type pixel 110 belongs. Meanwhile, if the pixel signal falls below the threshold, the signal processing unit 209 determines to perform long exposure on the pixel block 101 to which the first-type pixel 110 belongs. The signal processing unit 209 may determine whether to perform short exposure or long exposure based on a table in which the values of a pixel signal are associated with the modes of exposure time.

The TG 208, the vertical block scanning circuit 204, the horizontal block scanning circuit 202, and the selection circuits 401 are controlled based on the processing result of the signal processing unit 209. Different exposure times can thus be set pixel block by pixel block.

As described above, the exposure times of the pixel blocks 101 can be controlled after the thinning-out reading on predetermined pixels arranged in the respective pixel blocks 101. According to the present modification, the exposure times are controlled by using pixels read in a thinning-out manner, compared to the case where the signals are read from all the pixels before the exposure times of the respective pixel blocks 101 are determined. Optimum exposure conditions can thus be determined in a shorter time.

Motion information about an object in each pixel block 101 can be extracted from differences between frames. Depending on the motion of the object, for example, pixel blocks subjected to short exposure in the previous frame can be switched to long exposure, or conversely, pixel blocks subjected to long exposure in the previous frame can be switched to short exposure. The extraction of the motion information can be performed by the signal processing unit 209.

### (Other Modifications)

In the foregoing example, the first pixel block and the second pixel block arranged in the same row are described to have different charge accumulation times. However, the first pixel block and the second pixel block may be driven for the same charge accumulation time. Such driving can even be performed since the imaging device is configured in such a manner that the input timing of the pixel driving signals PTX[Y, Z] concerning the plurality of pixel blocks 101 can be independently selected.

The present exemplary embodiment has dealt with the case where the imaging device includes two rows and two columns of pixel blocks 101 each including two rows and two columns of pixels. However, the selection circuits 401 described in the exemplary embodiment can be applied to pixel blocks of various scales.

According to the present exemplary embodiment, a row transfer pulse signal PTX[X] is described to correspond to each row of pixels. However, a plurality of signal lines of row transfer pulse signals PTX[X] may be provided for each row of pixels, and the driving conditions of the respective pixel blocks 101 may be changed by the selection circuits 401.

According to the present exemplary embodiment, the vertical block scanning circuit (first block scanning circuit) 204 is described to have the function of a vertical canning circuit (first scanning circuit). However, a vertical block scanning circuit (first block scanning circuit) and a vertical scanning circuit (first scanning circuit) may be separately provided.

According to the present exemplary embodiment, different exposure times are set pixel block by pixel block. However, different exposure times can be set pixel by pixel by using the foregoing selection circuits 401.

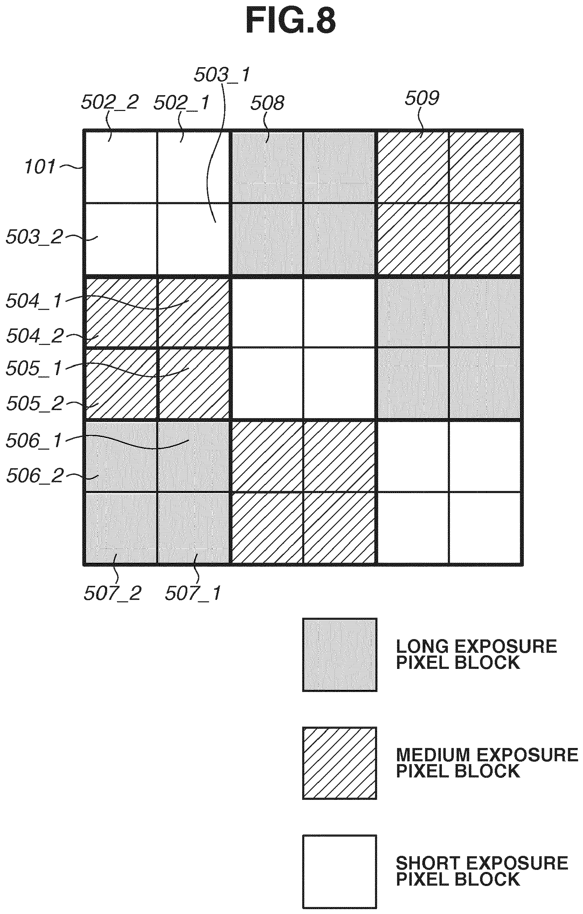

Fig. 8 illustrates a second exemplary embodiment in which three rows and three columns, i.e., a total of nine pixel blocks 101 each including two rows and two columns, i.e., a total of four pixels are arranged. The pixel blocks 101 illustrated in white are pixel blocks for short exposure. The pixel blocks 101 illustrated in gray are pixel blocks for long exposure. The pixel blocks 101 illustrated with hatching are pixel blocks for medium exposure.

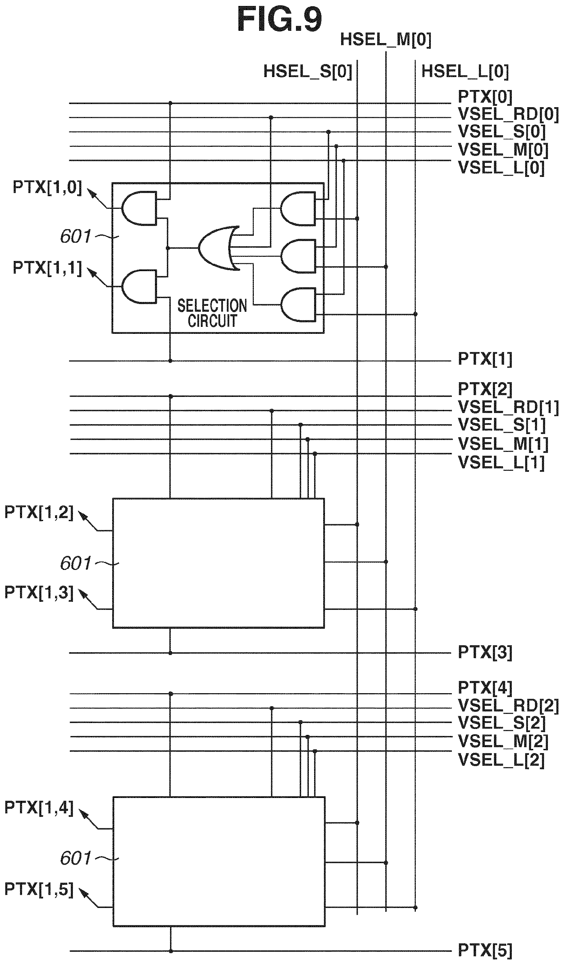

Fig. 9 illustrates an example of signal line groups for transmitting control signals. Signal lines VSEL transmit vertical block control signals. Signal lines HSEL transmit horizontal block control signals. Signal lines VSEL_S are intended for short exposure. Signal lines VSEL_M are intended for medium exposure. Signal lines VSEL_L are intended for long exposure. A signal line HSEL_S is intended for short exposure. A signal line HSEL_M is intended for medium exposure. A signal line HSEL_L is intended for long exposure. Signal lines VSEL_RD are intended for reading.

A selection circuit 601 generates a pixel transfer pulse signal PTX[Y, Z] from a row transfer pulse signal PTX[X] if both the signals supplied to the signal lines HSEL_S and VSEL_S are at a high level. The selection circuit 601 also generates the pixel transfer pulse signal PTX[Y, Z] from the row transfer pulse signal PTX[X] if both the signals supplied to the signal lines HSEL_M and VSEL_M are at a high level. The selection circuit 601 also generates the pixel transfer pulse signal PTX[Y, Z] from the row transfer pulse signal PTX[X] if both the signals supplied to the signal lines HSEL_L and VSEL L are at a high level. The generated pixel transfer pulse signal PTX[Y, Z] is input to the gates of transfer transistors M2. In other combinations, the pixel transfer pulse signal PTX[Y, Z] is not generated from the row transfer pulse signal PTX[X] and no signal is input to the gates of the transfer transistors M2.

In Fig. 9, a signal line PTX[1, 0] transmits the pixel transfer pulse signal to be input to the gates of the transfer transistors M2 of pixels 502_1 and 502_2. Similarly, a signal line PTX[1, 1] corresponds to pixels 503_1 and 503_2. A signal line PTX[1, 2] corresponds to pixels 504_1 and 504_2. A signal line PTX[1, 3] corresponds to pixels 505_1 and 505_2. A signal line PTX[1, 4] corresponds to pixels 506_1 and 506_2. A signal line PTX[1, 5] corresponds to pixels 507_1 and 507_2.

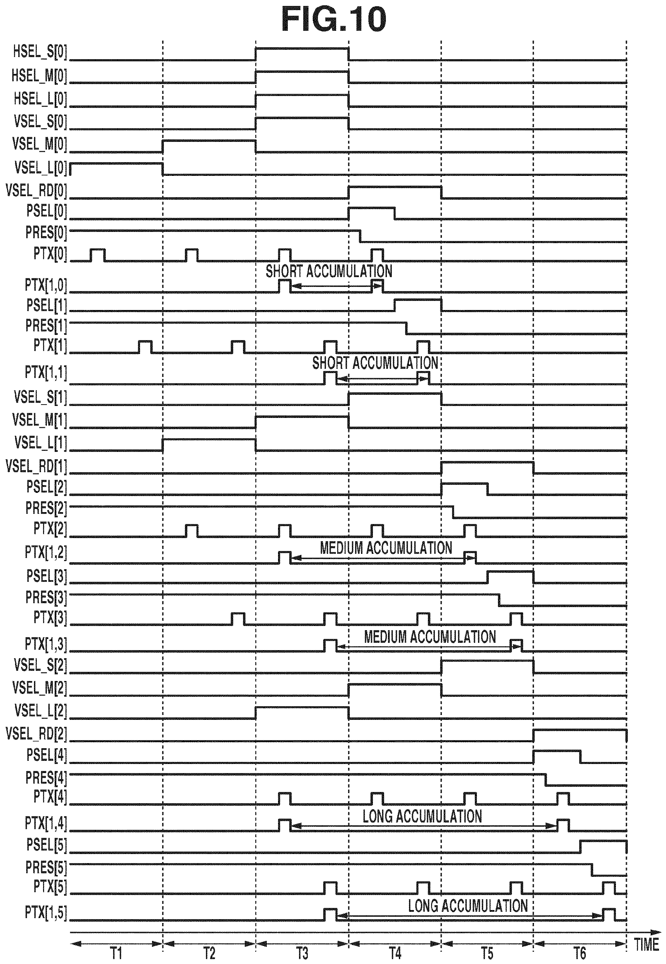

Fig. 10 illustrates a timing chart concerning the pixels 502_1 to 507_2.

### (Period T1)

Period T1 is a period for none of the pixels 502_1, 502_2, 503_1, and 503_2 belonging to the first-row, first-column pixel block 101 to start charge accumulation. In other words, the selection circuit 601 needs to be configured to not generate the pixel transfer pulse signals PTX[1, 0] and PTX[1, 1] even when the row transfer pulse signals PTX[0] and PTX[1] are input.

Here, the signal line VSEL_L[0] is connected in common to the plurality of pixels arranged in the first row. A pixel 508 for long exposure is arranged in the first-row, second-column pixel block 101. The signal on the signal line VSEL_L[0] therefore needs to be maintained at a high level. Since the signal on the signal line VSEL_L[0] is maintained at a high level, the pixel transfer pulse signal PTX[1, 0] would be generated from the row transfer pulse signal PTX[0] if the signal on the signal line HSEL_L[0] were set to a high level. As a result, the pixel transfer pulse signal PTX[1, 0] would be input to the gates of the transfer transistors M2 of the pixels 502_1 and 502_2. The signal on the signal line HSEL_L[0] is therefore maintained at a low level.

By such driving, the pixel transfer pulse signal PTX[1, 0] is not generated from the row transfer pulse signal PTX[0], and the pixel transfer pulse signal PTX[1, 1] is not generated from the row transfer pulse signal PTX[1]. No signal is thus input to the gates of the transfer transistors M2 of the pixels 502_1, 502_2, 503_1, and 503_2.

Concerning the first-row, second-column pixel block 101, the signal on the signal line VSEL_L[0] is at a high level. If the signal on the signal line HSEL_L[1] is set to a high level, the pixel transfer pulse signal PTX[2, 0] is generated from the row transfer pulse signal PTX[0] and the pixel transfer pulse signal PTX[2, 1] is generated from the row transfer pulse signal PTX[1].

### (Period T2)

Period T2 is a period for none of the pixels 502_1 to 507_2 belonging to the first-row, first-column pixel block 101 to the third-row, first-column pixel block 101 to start charge accumulation. In other words, the selection circuits 601 need to be configured to not generate the pixel transfer pulse signals PTX[1, 0] to PTX[1, 5] even when the row transfer pulse signals PTX[0] to PTX[5] are input.

The signal line VSEL_L[0] is connected in common to the plurality of pixels arranged in the first row. A pixel 509 for medium exposure is arranged in the first-row, third-column pixel block 101. The pixel 509 needs to start charge accumulation. The signal on the signal line VSEL_M[0] therefore needs to be maintained at a high level. Meanwhile, the pixels belonging to the first-row, first-column pixel block 101 do not start charge accumulation, and the pixel transfer pulse signals PTX[1,0] and PTX[1,1] need to be prevented from being generated. The signal on the signal line HSEL_M[0] is therefore maintained at a low level.

In period T1, the pixel block 101 for long exposure among the first-row pixel blocks 101 has started charge accumulation. In period T2, the pixel block 101 for long exposure among the second-row pixel blocks 101 needs to start charge accumulation. In Fig. 10, the signal on the signal line VSEL_L[1] is set to a high level since the second-row, third-column pixel block 101 performs long exposure. Meanwhile, the pixel transfer pulse signals PTX[1, 2] and PTX[1, 3] need to be prevented from being generated since the pixels belonging to the second-row, first-column pixel block 101 do not start charge accumulation. The signal on the signal line HSEL_L[0] is thus maintained at a low level.

By such driving, the pixel transfer pulse signals PTX[1, 0] to PTX[1, 5] are not generated from the row transfer pulse signals PTX[0] to PTX[5].

### (Period T3)

Period T3 is a period for the pixels 502_1 to 507_2 belonging to the first-row, first-column pixel block 101 to the third-row, first-column pixel block 101 to start charge accumulation. More specifically, in period T3, the pixels 502_1, 502_2, 503_1, and 503_2 belonging to the first-row, first-column pixel block 101 start charge accumulation for short exposure. The pixels 504_1, 504_2, 505_1, and 505_2 belonging to the second-row, first-column pixel block 101 start charge accumulation for medium exposure. The pixels 506_1, 506_2, 507_1, and 507_2 belonging to the third-row, first-column pixel block 101 start charge accumulation for long exposure.

In such a case, all the signals on the horizontal block control signal lines HSEL_S[0], HSEL_M[0], and HSEL_L[0] are set to a high level. All the signals on the vertical block control signal lines VSEL_S[0], VSEL_M[1], and VSEL_L[2] are set to a high level. As a result, the pixel transfer pulse signal PTX[1, 0] is generated from the row transfer pulse signal PTX[0]. The pixel transfer pulse signal PTX[1, 0] is supplied to the gates of the transfer transistors M2 of the pixels 502_1 and 502_2. Similarly, the pixel transfer pulse signal PTX[1, 1] is generated from the row transfer pulse signal PTX[1]. The pixel transfer pulse signal PTX[1, 1] is supplied to the gates of the transfer transistors M2 of the pixels 503_1 and 503_2. Short accumulation is thereby started.

The pixel transfer pulse signal PTX[1, 2] is generated from the row transfer pulse signal PTX[2]. The pixel transfer pulse signal PTX[1, 2] is supplied to the gates of the transfer transistors M2 of the pixels 504_1 and 504_2. Similarly, the pixel transfer pulse signal PTX[1, 3] is generated from the row transfer pulse signal PTX[3]. The pixel transfer pulse signal PTX[1, 3] is supplied to the gates of the transfer transistors M2 of the pixels 505_1 and 505_2. Medium accumulation is thereby started.

The pixel transfer pulse signal PTX[1, 4] is generated from the row transfer pulse signal PTX[4]. The pixel transfer pulse signal PTX[1, 4] is supplied to the gates of the transfer transistors M2 of the pixels 506_1 and 506_2. Similarly, the pixel transfer pulse signal PTX[1, 5] is generated from the row transfer pulse signal PTX[5]. The pixel transfer pulse signal PTX[1, 5] is supplied to the gates of the transfer transistors M2 of the pixels 507_1 and 507_2. Long accumulation is thereby started.

### (Period T4)

The first-row, first-column pixel block 101 has started charge accumulation for short exposure in period T3. In period T4, the pixel block 101 for short exposure among the second-row pixel blocks 101 needs to start charge accumulation. In Fig. 10, the signal on the signal line VSEL_S[1] is set to a high level since the second-row, second-column pixel block 101 performs short exposure.

The second-row, first-column pixel block 101 has started charge accumulation for medium exposure in period T3. In period T4, the pixel block 101 for medium exposure among the third-row pixel blocks 101 needs to start charge accumulation. In Fig. 10, the signal on the signal line VSEL_M[2] is set to a high level since the third-row, second-column pixel block 101 performs medium exposure.

Meanwhile, the first-row, first-column pixel block 101 having started charge accumulation in period T3 needs to end the charge accumulation for short exposure in period T4. For that purpose, the signal on the signal line VSEL_RD[0] is set to a high level. The signal lines VSEL_RD are intended for reading. If the signals on the signal lines VSEL_RD are set to a high level, the pixel transfer pulse signals PTX[Y, Z] are generated from the row transfer pulse signals PTX[X] regardless of the levels of the signal lines VSEL and HSEL. The pixel transfer pulse signals PTX[Y, Z] are thus supplied to the gates of the transfer transistors M2 of the pixels 502_1, 502_2, 503_1, and 503_2.

In period T4, the pixels 504_1 to 507_2 belonging to the second-row, first-column pixel block 101 and the third-row, first-column pixel block 101 continue medium and long exposure. In period T4, the pixel transfer pulse signals PTX[Y, Z] are not supplied to the gates of the transfer transistors M2 of the pixels 504_1 to 507_2. The signals on the signal lines HSEL_M[0] and HSEL_L[0] are maintained at a low level so that the pixel transfer pulse signals PTX[Y, Z] are not generated from the row transfer pulse signals PTX[2] to PTX[5]. As a result, the pixel driving signals to be supplied to the gates of the transfer transistors M2 are not supplied to the pixels 504_1 to 507_2.

### (Period T5)

The second-row, second-column pixel block 101 has started charge accumulation for short exposure in period T4. In period T5, the pixel block 101 for short exposure among the third-row pixel blocks 101 needs to start charge accumulation. In Fig. 10, the signal on the signal line VSEL_S[2] is set to a high level since the third-row, third-column pixel block 101 performs short exposure.

Period T5 is a period for the pixels 504_1, 504_2, 505_1, and 505_2 belonging to the second-row, first-column pixel block 101 to end the charge accumulation for medium exposure. The pixel transfer pulse signals PTX[Y, Z] need to be supplied to the gates of the transfer transistors M2 of the pixels 504_1, 504_2, 505_1, and 505_2. For that purpose, the signal on the signal line VSEL_RD[1] is set to a high level. As a result, the pixel transfer pulse signals PTX[Y, Z] are generated from the row transfer pulse signals PTX[2] and PTX[3]. The pixel transfer pulse signals PTX[Y, Z] are supplied to the gates of the transfer transistors M2 of the pixels 504_1, 504_2, 505_1, and 505_2.

In period T5, the pixels 506_1 to 507_2 belonging to the third-row, first-column pixel block 101 continue long exposure. The corresponding pixel transfer pulse signals PTX[Y, Z] are therefore not supplied to the gates of the transfer transistors M2 of the pixels 506_1 to 507_2. The signal on the signal line HSEL_L[0] or VSEL_L[2] is maintained at a low level so that the pixel transfer pulse signals PTX[Y, Z] are not generated from the row transfer pulse signals PTX[4] and PTX[5] and the pixel driving signals to be supplied to the gates of the transfer transistors M2 are not supplied to the pixels 506_1 to 507_2.

### (Period T6)

Period T6 is a period for the pixels 506_1, 506_2, 507_1, and 507_2 belonging to the third-row, first-column pixel block 101 to end the charge accumulation for long exposure. The corresponding pixel transfer pulse signals PTX[Y, Z] need to be supplied to the gates of the transfer transistors M2 of the pixels 506_1, 506_2, 507_1, and 507_2. For that purpose, the signal on the signal line VSEL_RD[2] is set to a high level. As a result, the pixel transfer pulse signals PTX[Y, Z] are generated from the row transfer pulse signals PTX[4] and PTX[5]. The pixel transfer pulse signals PTX[Y, Z] are supplied to the gates of the transfer transistors M2 of the pixels 506_1, 506_2, 507_1, and 507_2.

With such a configuration, the number of exposure time settings can be increased to three.

Although not described in detail above, the signal lines PSEL illustrated in Fig. 10 transmit the signals for turning on the selection transistors M4. The signal lines PRES transmit the signals for turning on the reset transistors M1. The signal lines PSEL and PRES are included in the vertical block control signal line group 205.

The foregoing selection of the pixel driving signals by using the horizontal block control signal line group 203 and the vertical block control signal line group 205 is just an example. The selection circuits 601 according to the present exemplary embodiment may be any circuit that is configured to be able to independently select the input timing of the pixel driving signals PTX[Y, Z] related to a plurality of pixel blocks 101.

In the foregoing example, a first pixel block and a second pixel block arranged in the same row are described to have different charge accumulation times. However, the first pixel block and the second pixel block may be driven for the same charge accumulation time but with different exposure start and end times. Such driving can be performed since the input timing of the pixel driving signals PTX[Y, Z] concerning the plurality of pixel blocks 101 can be independently selected.

According to the present exemplary embodiment, the imaging device is described to include three rows and three columns of pixel blocks 101 each including two rows and two columns of pixels. However, such a configuration is not restrictive. In the foregoing example, the number of exposure time settings is described to be three. However, a greater number of exposure time settings can be made by configuring the vertical block control signals VSEL to include as many signals as the number of exposure time settings and a reading signal, and configuring the horizontal block control signals HSEL to include as many signals as the number of exposure time settings.

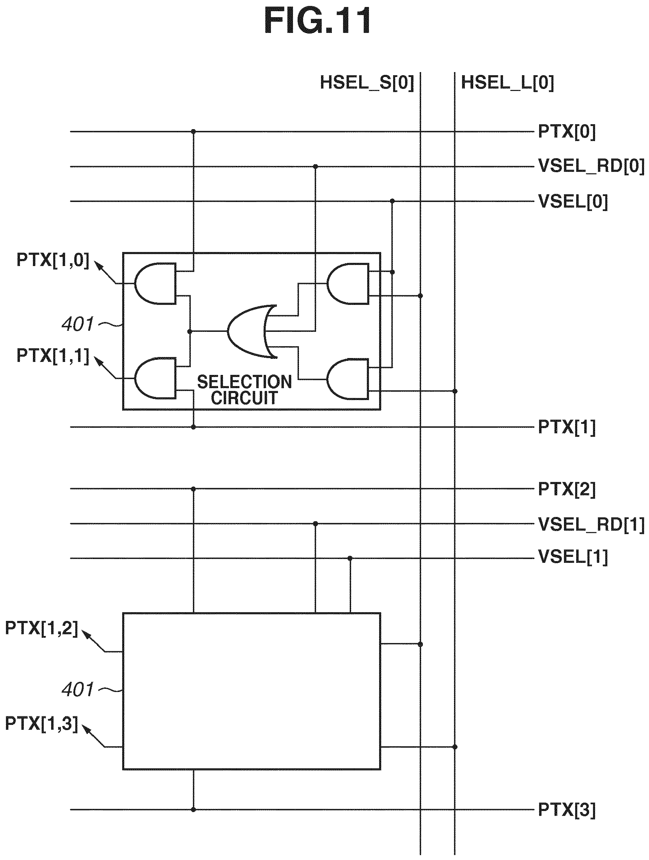

A third exemplary embodiment uses pixel blocks having the same configuration as illustrated in Fig. 3. Fig. 11 illustrates an example of signal line groups for transmitting control signals. A difference from Fig. 4 lies in the arrangement of the signal lines VSEL. A signal line VSEL_L and a signal line VSEL_S are integrated into one signal line VSEL, and timing control is performed in a time-divisional manner, whereby the wiring and the circuit scale are further reduced.

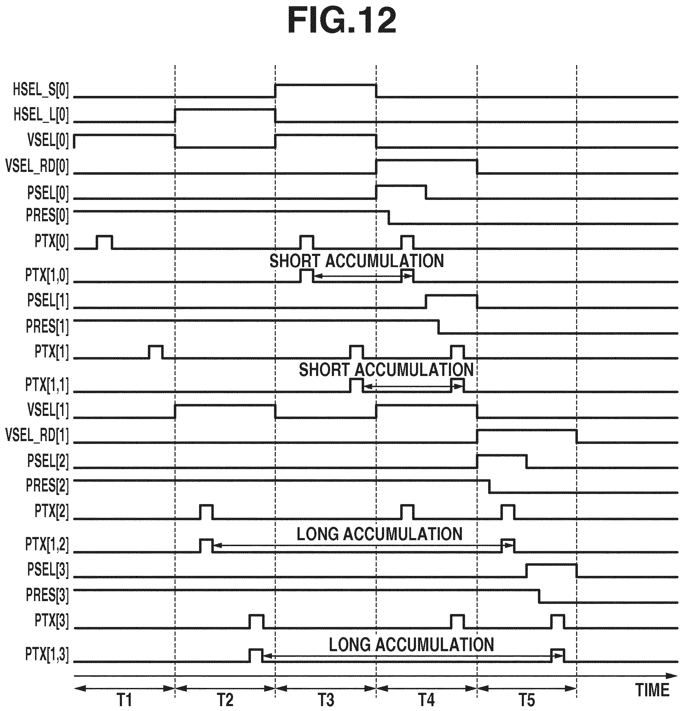

Fig. 12 illustrates a timing chart concerning the pixels 302_1 to 305_2.

### (Period T1)

Period T1 is a period for the first-row, first-column pixel block 101 to start charge accumulation if the pixel block 101 corresponds to a pixel block intended for long exposure, and not start charge accumulation if the pixel block 101 corresponds to a pixel block intended for short exposure. According to the present example, the first-row, first-column pixel block 101 is a pixel block for short exposure. Thus, in period T1, none of the pixels 302_1, 302_2, 303_1, and 303_2 starts charge accumulation. In other words, the selection circuit 401 needs to be configured to not generate the pixel transfer pulse signals PTX[1, 0] and PTX[1, 1] even if the row transfer pulse signals PTX[0] and PTX[1] are input. The signal line VSEL[0] is connected in common to the plurality of pixels arranged in the first row. The pixels 306_1 and 306_2 intended for long exposure are arranged in the first-row, second-column pixel block 101. The signal on the signal line VSEL [0] therefore needs to be maintained at a high level. Since the signal on the signal line VSEL[0] is at a high level, the pixel transfer pulse signal PTX[1, 0] would be generated from the row transfer pulse signal PTX[0] and input to the gates of the transfer transistors M2 of the pixels 302_1 and 302_2 if the signal on the signal line HSEL_L[0] were set to a high level. The signal on the signal line HSEL_L[0] is therefore maintained at a low level. The signal on the signal line HSEL_L[1] is also maintained at a low level.

By such driving, the pixel transfer pulse signal PTX[1, 0] is not generated from the row transfer pulse signal PTX[0], and the pixel transfer pulse signal PTX[1, 1] is not generated from the row transfer pulse signal PTX[1]. No signal is thus input to the gates of the transfer transistors M2 of the pixels 302_1, 302_2, 303_1, and 303_2.

### (Period T2)

Period T2 is a period for the second-row, first-column pixel block 101 to start charge accumulation if the pixel block 101 corresponds to a pixel block for long exposure, and not start charge accumulation if the pixel block 101 corresponds to a pixel block for short exposure. According to the present exemplary embodiment, the pixels 304_1, 304_2, 305_1, and 305_2 are pixels belonging to a pixel block for long exposure. In period T2, charge accumulation for long exposure is therefore started. Here, the signals on the signal lines VSEL[1] and HSEL_L[0] are set to a high level. As a result, the pixel transfer pulse signal PTX[1, 2] is generated from the row transfer pulse signal PTX[2]. The pixel transfer pulse signal PTX[1, 2] is supplied to the gates of the transfer transistors M2 of the pixels 304_1 and 304_2. Similarly, the pixel transfer pulse signal PTX[1, 3] is generated from the row transfer pulse signal PTX[3]. The pixel transfer pulse signal PTX[1, 3] is supplied to the gates of the transfer transistors M2 of the pixels 305_1 and 305_2. Long accumulation is thereby started.

### (Period T3)

Period T3 is a period for the first-row, first-column pixel block 101 to start charge accumulation for short exposure. Specifically, in period T3, the pixels 302_1, 302_2, 303_1, and 303_2 start charge accumulation for short exposure. In such a case, both the signals on the signal lines VSEL[0] and HSEL_S[0] are set to a high level. As a result, the pixel transfer pulse signal PTX[1, 0] is generated from the row transfer pulse signal PTX[0]. The pixel transfer pulse signal PTX[1, 0] is supplied to the gates of the transfer transistors M2 of the pixels 302_1 and 302_2. Similarly, the pixel transfer pulse signal PTX[1, 1] is generated from the row transfer pulse signal PTX[1]. The pixel transfer pulse signal PTX[1, 1] is supplied to the gates of the transfer transistors M2 of the pixels 303_1 and 303_2. Short accumulation is thereby started.

### (Period T4)

Period T4 is a period for the pixels 302_1, 302_2, 303_1, and 303_2 belonging to the first-row, first-column pixel block 101 to end the charge accumulation for short exposure. The pixel transfer pulse signals PTX[Y, Z] need to be supplied to the gates of the transfer transistors M2 of these pixels. For that purpose, the signal on the signal line VSEL_RD[0] is set to a high level. The signal lines VSEL_RD are intended for reading. If the signals on the signal lines VSEL_RD are set to a high level, the pixel transfer pulse signals PTX[Y, Z] are generated from the row transfer pulse signals PTX[X] regardless of the levels of the signal lines VSEL and HSEL. The pixel transfer pulse signals PTX[Y, Z] are thus supplied to the gates of the transfer transistors M2 of the pixels 302_1, 302_2, 303_1, and 303_2.

In period T4, the pixels 304_1, 304_2, 305_1, and 305_2 belonging to the second-row, first-column pixel block 101 continue long exposure. In period T4, the corresponding pixel transfer pulse signals PTX[Y, Z] are not supplied to the gates of the transfer transistors M2 of the pixels 304_1, 304_2, 305_1, and 305_2. Since the signals on the signal lines HSEL_S[0] and HSEL_L[0] are maintained at a low level, the pixel transfer pulse signals PTX[Y, Z] are not generated from the row transfer pulse signals PTX[2] and PTX[3].

### (Period T5)

Period T5 is a period for the pixels 304_1, 304_2, 305_1, and 305_2 belonging to the second-row, first-column pixel block 101 to end the charge accumulation for long exposure. The pixel transfer pulse signal PTX[Y, Z] needs to be supplied to the gates of the transfer transistors M2 of such pixels. For that purpose, the signal on the signal line VSEL_RD[1] is set to a high level. As a result, the pixel transfer pulse signals PTX[Y, Z] are generated from the row transfer pulse signals PTX[2] and PTX[3], and supplied to the gates of the transfer transistors M2 of the pixels 304_1, 304_2, 305_1, and 305_2.

Although not described in detail above, the signal lines PSEL illustrated in Fig. 12 transmit the signals for turning on the selection transistors M4. The signal lines PRES transmit the signals for turning on the reset transistors M1. The signal lines PSEL and PRES are included in the vertical block control signal line group 205.

With the foregoing configuration, a signal line VSEL_L and a signal line VSEL_S can be integrated into one signal line VSEL. This can reduce the circuit scale and improve the degree of freedom in layout.

In the present exemplary embodiment, signal lines VSEL_L and VSEL_S are described to be integrated into one. Signal lines HSEL_L and HSEL_S may be integrated into one as well.

The foregoing selection of the pixel driving signals by using the horizontal block control signal line group 203 and the vertical block control signal line group 205 is just an example. The selection circuits 401 according to the present exemplary embodiment may be any circuit that is configured to be able to independently select the input timing of the pixel driving signals related to a plurality of pixel blocks 101.

In the foregoing example, a first pixel block and a second pixel block arranged in the same row are described to have different charge accumulation times. However, the first pixel block and the second pixel block may be driven for the same charge accumulation time but with different exposure start and end times. Such driving can even be performed since the input timing of the pixel driving signals related to the plurality of pixel blocks 101 can be independently selected.

According to the present exemplary embodiment, the imaging device is described to include two rows and two columns of pixel blocks 101 each including two rows and two columns of pixels. However, such a configuration is not restrictive.

In the foregoing first exemplary embodiment, the first chip and the second chip are described to be stacked on each other. The first chip includes the pixel blocks 101, and the second chip includes the circuit blocks 201 including the selection circuits 401. By contrast, a fourth exemplary embodiment describes a case where pixels and selection circuits are provided on the same chip.

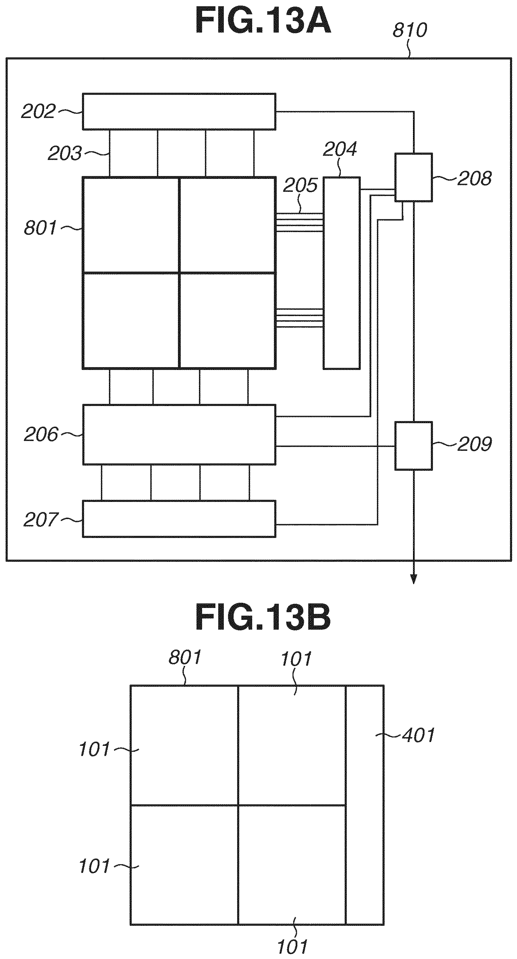

Fig. 13A illustrates a substrate 810 according to the fourth exemplary embodiment. A TG 208 supplies timing signals to a vertical block scanning circuit 204 (first block scanning circuit) having the function of a vertical scanning circuit (first scanning circuit) and a horizontal block scanning circuit 202 (second block scanning circuit). The TG 208 also supplies timing signals to a horizontal scanning circuit 207 (second scanning circuit) and a column circuit 206.

Signals from the vertical block scanning circuit 204 are input to a plurality of circuit blocks 801 via a vertical block control signal line group 205. The vertical block scanning circuit 204 outputs signals for controlling the driving timing of a plurality of pixels arranged in a row direction. Signals from the horizontal block scanning circuit 202 are also input to the plurality of circuit blocks 801 via a horizontal block control signal line group 203. The column circuit 206 is further electrically connected to the plurality of circuit blocks 801. The horizontal block scanning circuit 202 outputs signals for controlling the driving timing of a plurality of pixels arranged in a column direction.

Fig. 13B illustrates a configuration of the plurality of circuit blocks 801. The plurality of circuit blocks 801 each includes a selection circuit 401 and a plurality of pixel blocks 101. The plurality of pixel block 101 each includes a plurality of pixels. For example, two rows and two columns, i.e., a total of four pixels constitute a pixel block 101. With such a non-stacked configuration, the pixel blocks 101 can be independently selected for exposure time control.

While Fig. 13B illustrates an example with two rows and two columns of pixel blocks 101, such a configuration is not restrictive.

In the foregoing fourth exemplary embodiment, the pixel blocks 101 and the selection circuit 401 are included in each circuit block 801. A fifth exemplary embodiment differs in that selection circuits are arranged in an area different from where pixel blocks are.

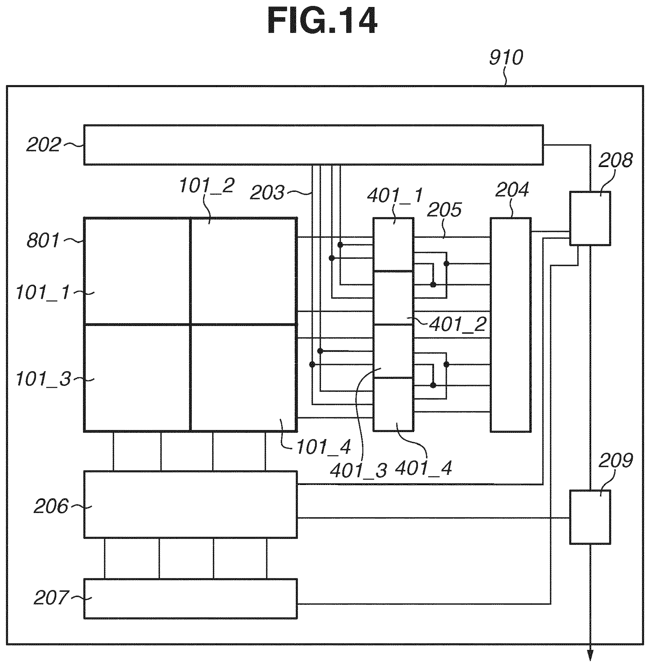

Fig. 14 illustrates a substrate 910 according to the fifth exemplary embodiment. A TG 208 provides timing signals for a vertical block scanning circuit 204 (first block scanning circuit), a horizontal block scanning circuit 202 (second block scanning circuit), a horizontal scanning circuit 207 (second scanning circuit), and a column circuit 206.

Signals from the vertical block scanning circuit 204 are input to selection circuit blocks 401_1 to 401 4 via a vertical block control signal line group 205. The vertical block scanning circuit 204 outputs signals for controlling the driving timing of a plurality of pixels arranged in a row direction. Signals from the horizontal block scanning circuit 202 are input to the selection circuit blocks 401_1 to 401_4 via a horizontal block control signal line group 203. The horizontal block scanning circuit 202 outputs signals for controlling the driving timing of a plurality of pixels arranged in a column direction.

The selection circuit blocks 401_1 to 401_4 input signals for controlling charge accumulation timing to pixel blocks 101_1 to 101_4, respectively. The pixel blocks 101_1 to 101_4 are further electrically connected to the column circuit 206.

With such a non-stacked configuration, the pixel blocks 101_1 to 101_4 can be independently selected for exposure time control.

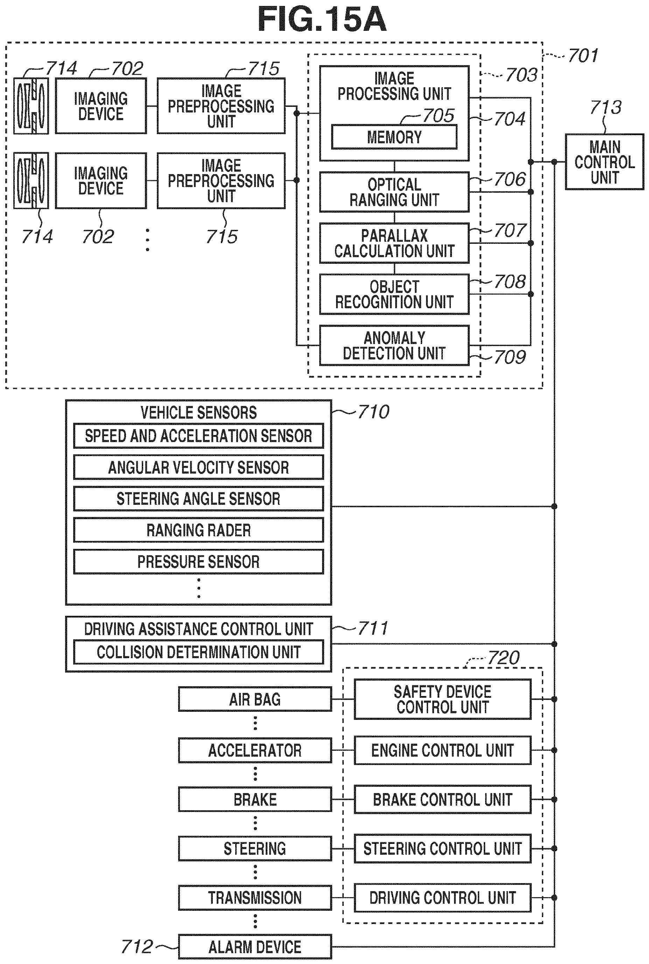

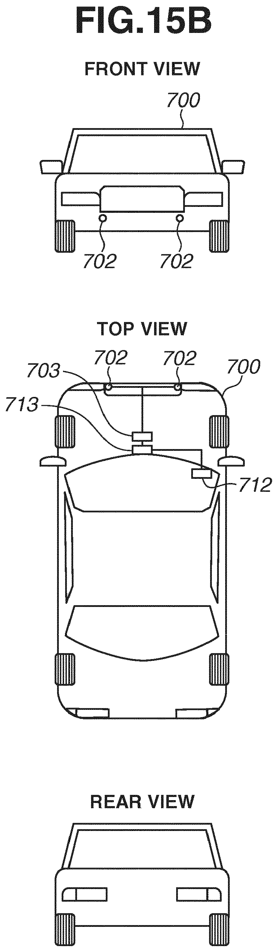

An imaging system and a moving body according to a sixth exemplary embodiment will be described with reference to Figs. 15A and 15B. The present exemplary embodiment deals with an example of an imaging system related to an in-vehicle camera. Fig. 15A illustrates an example of a vehicle system and an imaging system mounted thereon. An imaging system 701 includes imaging devices 702, image preprocessing units 715, an integrated circuit 703, and optical systems 714. The optical systems 714 form optical images of an object on the imaging devices 702. The imaging devices 702 convert the optical images of the object formed by the optical systems 714 into electrical signals. The imaging devices 702 are any of the imaging devices according to the foregoing exemplary embodiments. The image preprocessing units 715 perform predetermined signal processing on signals output from the imaging devices 702. The imaging system 701 includes at least two sets of optical systems 714, imaging devices 702, and image preprocessing units 715. The output from the image preprocessing unit 715 in each set is input to the integrated circuit 703.

The integrated circuit 703 is an integrated circuit for imaging system applications. The integrated circuit 703 includes an image processing unit 704 including a memory 705, an optical ranging unit 706, a parallax calculation unit 707, an object recognition unit 708, and an anomaly detection unit 709. The image processing unit 704 performs image processing such as development processing and defect correction on the output signals of the image preprocessing units 715. The memory 705 primarily stores captured images and stores the positions of defective imaging pixels. The optical ranging unit 706 performs focusing on an object and distance measurement. The parallax calculation unit 707 calculates a parallax (phase difference between parallax images) from a plurality of pieces of image data obtained by the plurality of imaging devices 702. The object recognition unit 708 recognizes objects such as a vehicle, a road, a traffic sign, and a human. If the anomaly detection unit 709 detects an anomaly of the imaging devices 702, the anomaly detection unit 709 warns a main control unit 713 of the anomaly.

The integrated circuit 703 may be implemented by dedicatedly designed hardware, by software modules, or a by combination of these. The integrated circuit 703 may be implemented by a field programmable gate array (FPGA) or an application specific integrated circuit (ASIC), or by a combination of these.

The main control unit 713 governs and controls operation of the imaging system 701, vehicle sensors 710, and control units 720. The imaging system 701, the vehicle sensors 710, and the control units 720 may include individual communication interfaces without the main control unit 713, and may each transmit and receive control signals via a communication network (for example, based on a Controller Area Network (CAN) standard).

The integrated circuit 703 has a function of transmitting control signals and setting values to the imaging devices 702 in response to control signals from the main control unit 713 or based on its own control unit. For example, the integrated circuit 703 transmits settings for pulse-driving voltage switches in the imaging devices 702 and settings for switching the voltage switches frame by frame.

The imaging system 701 is connected to the vehicle sensors 710, and can detect a running state of the own apparatus, including a vehicle speed, a yaw rate, and a steering angle, an environment outside the own vehicle, and the states of other vehicles and obstacles. The vehicle sensors 710 also serve as a distance information acquisition unit for obtaining distance information about a distance to an object from the parallax images. The imaging system 701 is also connected to a driving assistance control unit 711 for providing various driving assistances, such as automatic steering, automatic cruising, and a collision prevention function. In particular, as a collision determination function, the driving assistance control unit 711 estimates and determines the presence or absence of a collision with another vehicle or an obstacle based on the detection results of the imaging system 701 and the vehicle sensors 710. If a collision is estimated, avoidance control and collision safety devices are activated.

The imaging system 701 is also connected to an alarm device 712 for issuing an alarm to the driver based on the determination result of the collision determination function. For example, if the determination result of the collision determination function shows a high possibility of a collision, the main control unit 713 performs vehicle control for avoiding the collision or reducing damage by putting on the brake, releasing the accelerator, and/or suppressing engine output. The alarm device 712 warns the user by sounding an alarm, displaying alarm information on a display unit screen of a car navigation system or an instrument panel, and/or vibrating the seatbelt or the steering wheel.

According to the present exemplary embodiment, the imaging system 701 captures an image around the vehicle, e.g., in front or behind the vehicle. Fig. 15B illustrates an arrangement example of the imaging system 701 for a situation where the imaging system 701 captures an image in front of the vehicle.

According to the present exemplary embodiment, control for avoiding a collision with another vehicle has been described. However, the imaging system 701 is also applicable to controls such as performing automatic driving to follow another vehicle and performing automatic driving to not go out of lane. The imaging system 701 is not limited to a vehicle such as an automobile, and may be applied to any moving body (moving apparatus) such as a ship, an aircraft, and an industrial robot. The imaging system 701 is not even limited to a moving body, and may be widely applied to apparatuses that use object recognition. Examples include an intelligent transportation system (ITS).

### (Other Exemplary Embodiments)

While the exemplary embodiments have been described above, the present invention is not limited to such exemplary embodiments, and various changes and modifications may be made. The exemplary embodiments are mutually applicable.

According to an imaging device of an exemplary embodiment of the present disclosure, an imaging device that can independently control the exposure times of pixel blocks and includes operation signal generation circuits having a circuit scale smaller than a circuit scale discussed in Japanese Patent Application Laid-Open No. 2012-151847 can be provided.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An imaging device comprising:
a plurality of pixels arranged in a row and a column direction, each of the plurality of pixels including photoelectric conversion means and a transfer transistor configured to transfer a charge from the photoelectric conversion means;
a plurality of pixel blocks each including two or more pixels of the plurality of pixels;
a first block scanning circuit for outputting a vertical block control signal for controlling driving timing of the plurality of pixels arranged in the row direction;
a second block scanning circuit for outputting a horizontal block control signal for controlling the driving timing of the plurality of pixels arranged in the column direction;
a first scanning circuit for outputting a row transfer pulse signal for controlling the driving timing of the plurality of pixels arranged in the row direction;
a selection circuit for outputting a pixel transfer pulse signal to be input to gates of the transfer transistors of each of the plurality of pixels, based on the vertical block control signal, the horizontal block control signal, and the row transfer pulse signal;
a plurality of vertical block control signal lines provided to correspond to the plurality of pixel blocks arranged in a predetermined row to input the vertical block control signal to the selection circuit; and
a plurality of horizontal block control signal lines provided to correspond to the plurality of pixel blocks arranged in a predetermined column to input the horizontal block control signal to the selection circuit.

2. The imaging device according to claim 1, wherein the pixel transfer pulse signal is input in common to the gates of the transfer transistors of the plurality of pixels belonging to the same row in each of the pixel blocks.

3. The imaging device according to claim 2,
wherein the pixel blocks include a first pixel block and a second pixel block,
wherein the selection circuit outputs the pixel transfer pulse signal to be input to the plurality of pixels included in the first pixel block to perform exposure for a first exposure time, and
wherein the selection circuit outputs the pixel transfer pulse signal to be input to the plurality of pixels included in the second pixel block to perform exposure for a second exposure time having a duration different from that of the first exposure time.

4. The imaging device according to claim 3, wherein the plurality of horizontal block control signal lines includes a first horizontal block control signal line corresponding to the first exposure time and a second horizontal block control signal line corresponding to the second exposure time.

5. The imaging device according to claim 4, wherein the plurality of vertical block control signal lines includes a first vertical block control signal line corresponding to the first exposure time and a second vertical block control signal line corresponding to the second exposure time.

6. The imaging device according to claim 5, wherein the selection circuit outputs the pixel transfer pulse signal, based on a signal on the first vertical block control signal line and a signal on the first horizontal block control signal line, and outputs the pixel transfer pulse signal, based on a signal on the second vertical block control signal line and a signal on the second horizontal block control signal line.

7. The imaging device according to claim 1, comprising:
a first chip including the pixel blocks; and
a second chip including the selection circuit,
wherein the first chip and the second chip are stacked on each other.

8. The imaging device according to claim 7, wherein the second chip includes the first block scanning circuit, the second block scanning circuit, and the first scanning circuit.

9. The imaging device according to any one of claims 1 to 8,
wherein the selection circuit includes a plurality of selection circuits, and
wherein each of the plurality of pixel blocks are provided to correspond, respectively, to each of the plurality of selection circuits.

10. An imaging system comprising:
the imaging device according to any one of claims 1 to 9; and
signal processing means for generating an image by processing a signal output from the imaging device.

11. A moving body comprising:
the imaging device according to any one of claims 1 to 9;
distance information acquisition means for obtaining distance information about a distance to an object from a parallax image based on a signal from the imaging device; and
control means for controlling the moving body based on the distance information.

12. A moving body comprising:
the imaging system according to claims 10;
distance information acquisition means for obtaining distance information about a distance to an object from a parallax image based on a signal from the imaging system; and
control means for controlling the moving body based on the distance information.
